# EUROPEAN PATENT APPLICATION

(11) **EP 4 759 621 A1**
(43) Date of publication of application: **17.06.2026**
(21) Application number: 24870801.8
(22) Date of filing: 25.09.2024
(51) Int. Cl.: B60L 53/60, B60L 53/68, B60L 53/30, G06Q 10/20, G06Q 50/06, G06F 18/10

(54) **CHARGING STATION MANAGEMENT METHOD AND SYSTEM**

(30) Priority: 28.09.2023 CN 202311278798
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Pinhao, Ningbo, Zhejiang 315899 (CN); ZHANG, Cong, Ningbo, Zhejiang 315899 (CN); ZHENG, Laiwei, Ningbo, Zhejiang 315899 (CN)
(74) Representative: Michalski Hüttermann & Partner mbB
(86) International application number: PCT/CN2024/121180
(87) International publication number: WO 2025/067257

(57) **Abstract**

A charging station management method and system. The method is applied to an operation subsystem in a management system, wherein the management system further comprises a storage subsystem. The method comprises: an operation subsystem acquiring charging station information corresponding to at least one operator, and storing the charging station information in a storage subsystem; making its own or an external computing subsystem perform data cleaning on the charging station information stored in the storage subsystem, so as to obtain a data cleaning result; and determining, from the data cleaning result, abnormal information of a charging station corresponding to any operator among the at least one operator.

## Description

### CROSS-REFERENCE TO RELATED APPLICATIONS

The present application claims priority to Chinese patent application No. 202311278798.1, filed with the China National Intellectual Property Administration on September 28, 2023, which is hereby incorporated by reference in its entirety.

### TECHNICAL FIELD

Embodiments of the present application relate to, but are not limited to, the field of vehicle technologies, and in particular, relate to, but are not limited to, a charging station management method, system, and apparatus, an electronic device, and a machine-readable storage medium.

### BACKGROUND

When a third-party service platform asserts uniform control and management over charging stations run by various operators, due to the charging station information provided by the service platforms of different operators having missing or incorrect information, the corresponding charging stations may not be able to get online normally, and thus cannot provide charging services to users; or, due to the abnormal state of the charging station itself, the charging station is in the offline status, and thus cannot provide charging services to users.

### SUMMARY

The following is a summary of subject matter described in detail herein. This summary is not intended to limit the scope of the claims. The present disclosure provides a charging station management method, applicable to an operation subsystem in a management system, wherein the management system further includes a storage subsystem, and the method includes: acquiring charging station information corresponding to at least one operator, and storing the charging station information into the storage subsystem; causing the operation subsystem or an external computing subsystem to perform data cleaning on the charging station information stored in the storage subsystem to obtain a data cleaning result; and determining, from the data cleaning result, abnormal information of a charging station corresponding to any one of the at least one operator.

In some embodiments, the method further includes: outputting the abnormal information to a user.

In some embodiments, the method further includes: causing the operation subsystem or the computing subsystem to compare the charging station information stored in the storage subsystem with historical charging station information to obtain a comparison result; determining, based on the comparison result, whether at least one of a count of charging stations or the charging station information corresponding to each of the at least one operator has changed; and in response to determining that at least one of the count of charging stations or the charging station information corresponding to any one of the at least one operator has changed, recording changed charging station information.

In some embodiments, the method further includes: outputting the changed charging station information to a user.

In some embodiments, the charging station information includes address information of a charging station; and causing the operation subsystem or the computing subsystem to perform data cleaning on the charging station information stored in the storage subsystem to obtain the data cleaning result includes: acquiring the address information of the charging station; determining whether the address information of the charging station is complete; in response to determining that the address information of the charging station is complete, parsing the address information by calling an address parsing application programming interface (API) to obtain a parsing result, and determining whether the address information is accurate based on the parsing result; in response to determining that the address information is inaccurate, generating first indication information indicating that an address of the charging station is abnormal, and determining the first indication information as the data cleaning result; and in response to determining that the address information of the charging station is incomplete, generating the first indication information and determining the first indication information as the data cleaning result.

In some embodiments, parsing the address information by calling the address parsing API to obtain the parsing result, and determining whether the address information is accurate based on the parsing result includes: parsing the address information by calling the address parsing API to generate latitude and longitude information corresponding to the address information, querying whether a location corresponding to the longitude and latitude information matches the address information; and in response to determining that the location corresponding to the longitude and latitude information matches the address information, determining that the address information is accurate.

In some embodiments, the charging station information includes a count of devices in a charging station; and causing the operation subsystem or the computing subsystem to perform data cleaning on the charging station information stored in the storage subsystem to obtain the data cleaning result includes: acquiring the count of devices in the charging station; determining whether the count of devices is equal to a preset count; and in response to determining that the count of devices is equal to the preset count, generating second indication information indicating that the count of devices is equal to the preset count, and determining the second indication information as the data cleaning result.

In some embodiments, the charging station information includes state information of a charging station; and causing the operation subsystem or the computing subsystem to perform data cleaning on the charging station information stored in the storage subsystem to obtain the data cleaning result includes: acquiring the state information of the charging station; determining whether the state information of the charging station is state information corresponding to a preset time period; in response to determining that the state information of the charging station is the state information corresponding to the preset time period, determining whether a state of the charging station is normal based on the state information of the charging station; and in response to determining that the state of the charging station is abnormal, generating third indication information indicating that the state of the charging station is abnormal, and determining the third indication information as the data cleaning result; and in response to determining that the state information of the charging station is not the state information corresponding to the preset time period, generating the third indication information and determining the third indication information as the data cleaning result.

In some embodiments, the charging station information includes order information of a charging station; and causing the operation subsystem or the computing subsystem to perform data cleaning on the charging station information stored in the storage subsystem to obtain the data cleaning result includes: acquiring the order information of the charging station; determining whether the order information of the charging station includes normal order information within a preset time period; and in response to determining that the order information of the charging station does not include normal order information within the preset time period, generating fourth indication information indicating that the order information of the charging station is abnormal, and determining the fourth indication information as the data cleaning result.

In some embodiments, the charging station information includes price information of a charging station; and causing the operation subsystem or the computing subsystem to perform data cleaning on the charging station information stored in the storage subsystem to obtain the data cleaning result includes: acquiring the price information of the charging station; determining whether the price information of the charging station includes price information corresponding to a preset time period; and in response to determining that the price information of the charging station does not include the price information corresponding to the preset time period, generating fifth indication information indicating that the price information of the charging station is abnormal, and determining the fifth indication information as the data cleaning result.

In some embodiments, the at least one operator includes multiple operators; where causing the operation subsystem or the computing subsystem to perform data cleaning on the charging station information stored in the storage subsystem to obtain the data cleaning result includes: acquiring the charging station information corresponding to the multiple operators respectively; determining whether the charging station information corresponding to any one of the multiple operators overlaps with the charging station information corresponding to other operators of the multiple operators; and in response to determining that the charging station information corresponding to any one of the multiple operators overlaps with the charging station information corresponding to other operators of the multiple operators, generating sixth indication information indicating that an affiliation relationship of the charging station corresponding to the operator is abnormal, and determining the sixth indication information as the data cleaning result.

The present disclosure further provides a charging station management system, including: an operation subsystem, configured to acquire charging station information corresponding to at least one operator, and store the charging station information into the storage subsystem; causing the operation subsystem or an external computing subsystem to perform data cleaning on the charging station information stored in the storage subsystem to obtain a data cleaning result; and determine, from the data cleaning result, abnormal information of a charging station corresponding to any one of the at least one operator.

The present disclosure further provides an electronic device, including a communication interface, one or more processors, a memory, and a bus, where the communication interface, the one or more processors, and the memory are connected to each other by using the bus; the memory stores a machine-readable instruction; and the one or more processors call the machine-readable instruction to perform the charging station management method.

The present disclosure further provides a machine-readable storage medium storing a machine-readable instruction, where when the machine-readable instruction is called and executed by one or more processors, the charging station management method as described in the present disclosure.

The technical solution provided by the present disclosure may include at least the following beneficial effects: through the foregoing embodiments, the operation subsystem in the management system may acquire charging station information corresponding to at least one operator, and store the charging station information into the storage subsystem, so that the operation subsystem itself or an external computing subsystem performs data cleaning on the charging station information to obtain a data cleaning result, and abnormal information of a charging station corresponding to any one of the at least one operator may be determined from the data cleaning result. Based on the abnormal information, the charging station that needs to be maintained as well as the abnormality of the charging station can be determined, so that the maintenance personnel can be scheduled to perform targeted maintenance on the abnormal charging station in time, thereby improving charging station maintenance efficiency and providing a better charging service for the user. Other aspects will become apparent upon reading and understanding the drawings and detailed description.

### BRIEF DESCRIPTION OF DRAWINGS

FIG. 1 is an interaction diagram of a charging station management system according to an example embodiment.
FIG. 2 is a flowchart of a charging station management method according to an example embodiment.
FIG. 3 is a flowchart of another charging station management method according to an example embodiment.
FIG. 4 is a hardware structural diagram of an electronic device where a charging station management apparatus is located according to an example embodiment.
FIG. 5 is a block diagram of a charging station management apparatus according to an example embodiment.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the present application. Rather, they are merely examples of apparatuses and methods consistent with some aspects of the present disclosure as detailed in the appended claims.

In other embodiments, the steps of the corresponding methods are not necessarily performed in the order shown and described in this specification. In some other embodiments, the method may include more or fewer steps than those described in this specification. In addition, a single step described in this specification may be decomposed into a plurality of steps for description in other embodiments, and the plurality of steps described in this specification may also be combined into a single step for description in other embodiments.

A charging pile, also referred to as an electric vehicle charging pile or an electric vehicle charging device, is a device configured to charge an electric vehicle such as an electric car or an electric bicycle.

In current technology, to achieve open sharing of charging pile data and provide users with more convenient charging services, the new energy industry has formulated a complete protocol: the China Electricity Council protocol. Different operators correspond to different electric vehicle operation service platforms, and the service platforms include information of charging stations managed by the corresponding operators. In addition, the electric vehicle operation service platforms corresponding to different operators may perform information interaction based on the China Electricity Council protocol, and the third-party service platform may also perform information interaction with all operation service platforms based on the China Electricity Council protocol, so as to manage and control the charging station corresponding to each operator.

In practical applications, the information of the charging station included in the service platform corresponding to each operator may be missing or incorrect, and in this case, the third-party service platform cannot bring the charging station with missing information or incorrect information online, so that the charging service cannot be provided for the user. Alternatively, due to an abnormal state of the charging station itself, the charging station cannot go online, thereby making the charging station unable to provide charging services to users.

In view of this, the present disclosure provides a charging station management method. According to the method, data cleaning is performed on charging station information corresponding to at least one operator, and abnormal information of one or more charging stations corresponding to the at least one operator is determined from a data cleaning result, so that the one or more charging stations are brought online after the one or more charging stations are maintained according to the abnormal information, thereby providing charging services for users.

In an implementation, the method is performed by an operation subsystem 101 in a management system, and the management system may further include a computing subsystem 102 and a storage subsystem 103. The operation subsystem 101 may acquire charging station information corresponding to at least one operator, and store the charging station information into the storage subsystem 103. The operation subsystem 101 may be implemented by an electronic device.

In some embodiments, the operation subsystem 101 may send an execution instruction to the computing subsystem 102, so that the computing subsystem 102 acquires the charging station information from the storage subsystem 103, performs data cleaning on the charging station information, and returns a data cleaning result to the operation subsystem 101.

In some embodiments, the operation subsystem 101 may determine abnormal information of a charging station corresponding to any one of the at least one operator from the data cleaning result.

According to the foregoing embodiment, the operation subsystem 101 in the management system may obtain the charging station information corresponding to at least one operator, and store the charging station information into the storage subsystem 103, so that the operation subsystem 101 or the external computing subsystem 102 performs data cleaning on the charging station information, to obtain the data cleaning result. In this way, the operation subsystem 101 may determine, from the data cleaning result, abnormal information of a charging station corresponding to any one of the at least one operator, and determine, based on the abnormal information, a charging station that needs to be maintained and an abnormal situation of the charging station, so that the maintenance personnel can be scheduled to perform targeted maintenance on the abnormal charging station in time, thereby improving maintenance efficiency of the charging station and providing a better charging service for the user.

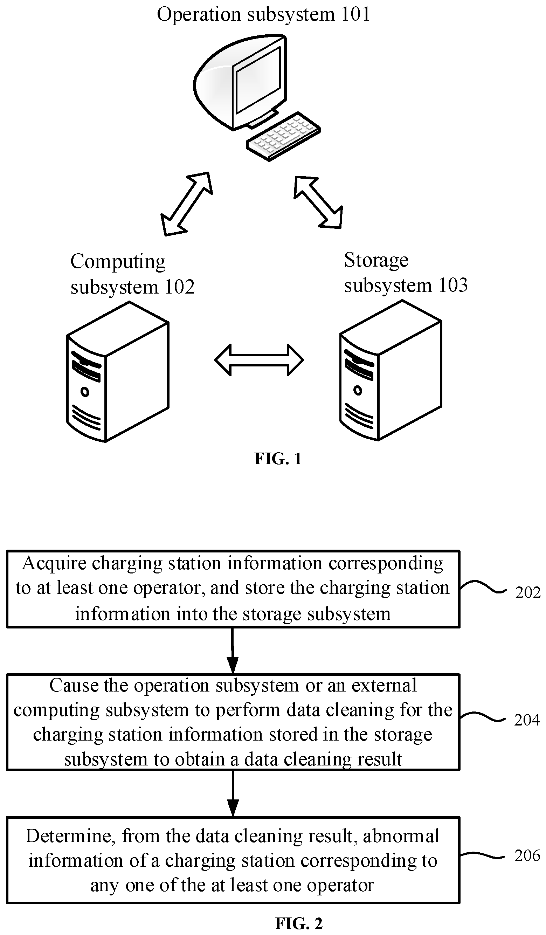

The charging station management method is performed by the operation subsystem 101 in the management system. The management system may further include the computing subsystem 102 and the storage subsystem 103, and information exchange may be performed between subsystems included in the management system based on a specific communication protocol, for example, the above-mentioned China Electricity Council protocol, so that charging stations corresponding to various operators can be controlled. Referring to FIG. 1, FIG. 1 is an architectural diagram of a charging station management system according to an example embodiment. The management system may include an operation subsystem 101, a storage subsystem 103, and a computing subsystem 102.

The operation subsystem 101 may include an external connection system and an internal station operation system. The external connection system may be configured to connect with a service platform corresponding to at least one operator, acquire charging station information from the service platform, store the charging station information into the storage subsystem 103, and send an execution instruction to the computing subsystem 102, to trigger the computing subsystem 102 to obtain the charging station information from the storage subsystem 103, perform data cleaning on the charging station information, and return a data cleaning result to the operation subsystem 101. The internal station operation system may be configured to determine, from the data cleaning result, abnormal information of a charging station corresponding to any one of the at least one operator, and may store the abnormal information in a database, so that the maintenance personnel obtains the abnormal information from the database and perform a subsequent maintenance operation.

The computing subsystem 102 may be configured to: in response to an execution instruction sent by the operation subsystem 101, obtain the charging station information from the storage subsystem 103, perform data cleaning on the charging station information, and return a data cleaning result to the operation subsystem 101.

In an embodiment, the computing subsystem 102 may be Alibaba Cloud Datawork. The Alibaba cloud Datawork is a big data computing and analysis platform that can provide users with functions such as data storage, data computing, data development, and data collaboration. In other embodiments, the computing subsystem 102 may also be a processor of the operation subsystem 101.

The storage subsystem 103 may be configured to store charging station information corresponding to at least one operator, and may send the charging station information to the computing subsystem 102 in response to an acquiring request of the computing subsystem 102.

In an embodiment, the storage subsystem 103 may be an OSS (Object Storage Service). The OSS is a secure, highly reliable and low-cost cloud storage service, and may be used to store and process various types of data, including text, images, audio, video, etc. In other embodiments, the storage subsystem 103 may be a memory of the operation subsystem 101.

In some embodiments, the operation subsystem 101 may directly perform the charging station management method, including: acquiring charging station information corresponding to at least one operator; performing data cleaning on the charging station information to obtain a data cleaning result; and determining abnormal information of a charging station corresponding to any one of the at least one operator from the data cleaning result.

The following will describe the present disclosure with reference to specific embodiments and specific application scenarios.

FIG. 2 is a flowchart of a charging station management method according to an example embodiment. As shown in FIG. 2, based on the three subsystems included in the management system, the operation subsystem 101 may perform steps 202-206.

In step 202, acquiring charging station information corresponding to at least one operator, and storing the charging station information into the storage subsystem 103.

The charging station information may be acquired by the external connection system in the operation subsystem 101 from a service platform corresponding to each of the at least one operator. The charging station information may include to-be-cleaned data, and may further include data that does not need to be cleaned. Therefore, target charging station information on which the data cleaning needs to be performed may be extracted from the charging station information first, and then the data cleaning is performed on the target charging station information.

After the external connection system obtains the charging station information, the operation subsystem 101 may directly perform a subsequent data cleaning operation on the obtained charging station information; or the operation subsystem 101 stores the charging station information into the storage subsystem 103, so that the computing subsystem 102 obtains the charging station information from the storage subsystem 103 and performs the subsequent data cleaning operation.

It should be noted that the operation subsystem 101 may obtain the charging station information from the service platform corresponding to each of the at least one operator by executing a scheduled task, and store the charging station information into the storage subsystem 103, so that when the computing subsystem 102 subsequently obtains the charging station information from the storage subsystem 103 and executes the data cleaning operation, it is unnecessary to rely on a real-time network connection, thereby effectively avoiding a failure of executing the data cleaning due to an offline state.

In step 204, performing, by the operation subsystem 101 or an external computing subsystem 102, data cleaning on the charging station information stored in the storage subsystem 103 to obtain a data cleaning result.

The operation subsystem 101 may directly perform data cleaning on the charging station information to obtain a data cleaning result. Alternatively, the operation subsystem 101 may also send an execution instruction to the computing subsystem 102 for executing the data cleaning task, to trigger the computing subsystem 102 to acquire the charging station information from the storage subsystem 103 and perform data cleaning on the charging station information, and after the data cleaning is completed, may return a data cleaning result to the internal station operation system in the operation subsystem 101.

Specific content included in the charging station information is not limited in this specification. For example, the charging station information may include address information, a count of devices, price information, state information, etc.

In an embodiment, the charging station information may include address information of the charging station. Correspondingly, performing data cleaning on the charging station information may include but is not limited to: determining whether the address information of the charging station is complete; in response to determining that the address information of the charging station is complete, parsing the address information by calling an address parsing application programming interface (API) to obtain a parsing result, and determining whether the address information is accurate based on the parsing result; in response to determining that the address information is inaccurate, generating first indication information indicating that an address of the charging station is abnormal, and determining the first indication information as the data cleaning result; and in response to determining that the address information of the charging station is incomplete, generating the first indication information and determining the first indication information as the data cleaning result. In addition, when the computing subsystem 102 performs the data cleaning operation, the computing subsystem 102 returns the first indication information to the operation subsystem 101.

In other words, the data cleaning operation may include performing data cleaning on the address information of the charging station to determine whether the address information is complete and whether the address information is accurate.

A manner of determining whether the address information is complete is not limited in this specification. For example, whether the address information is complete may be determined by determining whether the address information includes preset information, where the preset information may be province information, city information, etc., or the address information may be parsed by calling an address parsing API (application programming interface), and whether the address information is complete is determined based on a parsing result.

In response to determining that the address information is incomplete, it is determined that the address information is abnormal, and first indication information indicating that the address of the charging station is abnormal may be generated and determined as the data cleaning result. In response to determining that the address information is complete, it is necessary to further determine whether the address information is accurate, and in response to determining that the address information is inaccurate, it may also be determined that the address information is abnormal, and first indication information indicating that an address of the charging station is abnormal may be generated and determined as the data cleaning result.

When determining whether the address information is accurate, the address information may be parsed by calling the address parsing API, and whether the address information is accurate is determined based on a parsing result. Specifically, the address parsing API may be called to parse the address information, generate longitude and latitude information corresponding to the address information, and query whether a location corresponding to the longitude and latitude information matches the address information.

In this way, whether the address information of the charging station corresponding to each operator is complete and accurate can be determined. If the address information is abnormal, maintenance measures can be taken timely and precisely, thereby providing users with higher-quality charging services.

In an embodiment, the charging station information may include a count of devices in the charging station. Correspondingly, performing data cleaning on the charging station information may include but is not limited to: determining whether the count of devices is equal to a preset count; and in response to determining that the count of devices is equal to the preset count, generating second indication information indicating that the count of devices is equal to the preset count, and determining the second indication information as the data cleaning result. In addition, when the computing subsystem 102 performs the data cleaning operation, the computing subsystem 102 returns the second indication information to the operation subsystem 101.

The count of devices in the charging station may indicate a count of charging guns equipped in the charging station, where the charging gun is a device configured to charge an electric vehicle. If the count of charging devices is insufficient, a charging service cannot be provided for the user, and therefore, whether the count of charging devices is sufficient needs to be determined.

In other words, the data cleaning operation may include determining whether the count of devices in the charging station is equal to a preset count, and if the count of devices is equal to the preset count, second indication information indicating that the count of devices is equal to the preset count may be generated and determined as the data cleaning result.

A specific value of the preset count is not limited in this specification. For example, the preset count may be 0, or may be another value set based on an actual requirement. For example, a processor of the operation subsystem 101 or the computing subsystem 102 may determine whether the count of devices in the charging station is 0, and in response to determining that the count of devices is equal to 0, may generate the second indication information indicating that the count of devices is equal to 0.

In this way, it can be determined whether the charging station corresponding to each operator is equipped with enough charging devices, and if the devices are insufficient, supplementary measures can be taken timely and accurately, thereby providing users with better charging services.

In an embodiment, the charging station information may include state information of the charging station. Correspondingly, performing data cleaning on the charging station information may include, but is not limited to: determining whether the state information of the charging station is state information corresponding to a preset time period; if the state information of the charging station is state information corresponding to the preset time period, determining whether a state of the charging station is normal based on the state information; if it is determined that the state of the charging station is abnormal, generating third indication information indicating that the state of the charging station is abnormal and determining the third indication information as the data cleaning result; and if the state information of the charging station is not state information corresponding to the preset time period, generating the third indication information indicating that the state of the charging station is abnormal and determining the third indication information as the data cleaning result. In addition, when the computing subsystem 102 performs the data cleaning operation, the computing subsystem 102 returns the third indication information to the operation subsystem 101.

It is determined whether the state information of the charging station is state information corresponding to a preset time period. Specifically, each charging station may report the state information to the corresponding service platform within the preset period, and the processor of the operation subsystem 101 or the computing subsystem 102 may determine whether the charging station reports within the preset time period according to whether the state information of the charging station is the state information corresponding to the preset time period. If the state information of the charging station is not the state information corresponding to the preset time period, it indicates that the charging station does not report within the preset time period. In this case, it may be determined that the state of the charging station is abnormal, and third indication information indicating that the state of the charging station is abnormal may be generated.

If the state information of the charging station is state information corresponding to the preset time period, indicating that the charging station has been reported within the preset time period, it may be further determined, based on the state information, whether the state of the charging station is normal, and if it is determined that the state of the charging station is abnormal, third indication information indicating that the state of the charging station is abnormal may be generated.

The preset time period is not limited in this specification. For example, the preset time period may refer to preset week or preset fifteen days.

For example, the processor of the operation subsystem 101 or the computing subsystem 102 may determine whether the state information of the charging station is state information within one week; if the state information of the charging station is state information from one week ago, it may be determined that the state of the charging station is abnormal, and third indication information indicating that the state of the charging station is abnormal may be generated and determined as the data cleaning result; if the state information of the charging station is state information within one week, it may be further determined whether the state of the charging station is normal based on the state information of the charging station, and if the state of the charging station is abnormal, third indication information indicating that the state of the charging station is abnormal may be generated and determined as the data cleaning result.

In this way, it can be determined whether the state of the charging station corresponding to each operator is normal, and if the state of the charging station is abnormal, a corresponding maintenance measure can be taken based on the current state, thereby providing a better charging service for the user.

In an embodiment, the charging station information may include order information of the charging station. Correspondingly, performing data cleaning on the charging station information may include, but is not limited to: determining whether the order information of the charging station includes normal order information within a preset time period; and if it is determined that the order information of the charging station does not include the normal order information within the preset time period, generating fourth indication information for indicating that the order information of the charging station is abnormal and determining the fourth indication information as the data cleaning result. In addition, when the computing subsystem 102 performs the data cleaning operation, the computing subsystem 102 returns the fourth indication information to the operation subsystem 101.

The order information may include abnormal order information and normal order information. For example, when the user creates a charging order but the charging station does not provide a charging service, the charging station may generate corresponding abnormal order information, and when the user creates a charging order and the charging station provides a complete charging service, the charging station may generate corresponding normal order information.

The preset time period is not limited in this specification. For example, the preset time period may refer to a preset week or preset fifteen days.

For example, the processor of the operation subsystem 101 or the computing subsystem 102 may determine whether the order information of the charging station includes normal order information within one week; if it is determined that the order information of the charging station does not include normal order information within one week, fourth indication information indicating that the order information of the charging station is abnormal may be generated and determined as the data cleaning result.

In this way, it can be determined whether the charging station corresponding to each operator can generate a normal order and whether the charging station corresponding to each operator includes an order record of providing a charging service, and if the order information is abnormal, subsequent remedial measures can be performed based on the abnormality corresponding to the order information, so that a better charging service can be provided for the user.

In an embodiment, the charging station information may include price information of the charging station. Correspondingly, performing data cleaning on the charging station information may include, but is not limited to: determining whether the price information of the charging station includes price information corresponding to a preset time period; and if it is determined that the price information of the charging station does not include the price information corresponding to the preset time period, generating fifth indication information indicating that the price information of the charging station is abnormal and determining the fifth indication information as the data cleaning result. In addition, when the computing subsystem 102 performs the data cleaning operation, the computing subsystem 102 returns the fifth indication information to the operation subsystem 101.

Because for the price information, different prices correspond to different time periods, whether the price information of the charging station includes price information in each time period needs to be determined, to ensure completeness of the price information.

The preset time period is not limited in this specification. For example, the preset time period may be preset twenty-four hours, or may be preset one week.

For example, the processor of the operation subsystem 101 or the computing subsystem 102 may determine whether the price information of the charging station includes price information respectively corresponding to twenty-four hours; if it is determined that the price information of the charging station does not include price information respectively corresponding to twenty-four hours, fifth indication information indicating that the price information of the charging station is abnormal may be generated and determined as the data cleaning result. In addition, when the computing subsystem 102 performs the data cleaning operation, the computing subsystem 102 returns the fifth indication information to the operation subsystem 101.

In this way, it can be determined whether the price information of the charging station corresponding to each operator is complete, and if the price information is incomplete, the price information can be supplemented in time, so that more accurate charging information can be provided for the user.

In an embodiment, the at least one operator may include multiple operators. In this case, performing data cleaning on the charging station information may include but is not limited to: determining whether charging station information corresponding to any one of the multiple operators overlaps with charging station information corresponding to other operators of the multiple operators; and if it is determined that the charging station information corresponding to any one of the multiple operators overlaps with the charging station information corresponding to other operators of the multiple operators, generating sixth indication information indicating that an affiliation relationship of a corresponding charging station is abnormal and determining the sixth indication information as the data cleaning result. In addition, when the computing subsystem 102 performs the data cleaning operation, the computing subsystem 102 returns the sixth indication information to the operation subsystem 101.

In practical applications, if the charging station information corresponding to any one of the multiple operators overlaps with the charging station information corresponding to other operators of the multiple operators, it is indicated that there is a corresponding relationship between the charging station and the multiple operators, and in this case, it is inconvenient to manage the charging station, so this abnormal situation needs to be eliminated.

Specifically, if it is determined that the charging station information corresponding to any one of the multiple operators overlaps with the charging station information corresponding to the other operators of the multiple operators, it may be determined that there is an abnormal affiliation of the charging station, and sixth indication information indicating that the affiliation of the charging station corresponding to the operator is abnormal may be generated and determined as the data cleaning result.

For example, the multiple operators may include an operator_1, an operator_2, and an operator_3, and the processor of the operation subsystem 101 or the computing subsystem 102 may determine whether charging station information corresponding to any one of the three operators overlaps with charging station information corresponding to other operators, and if information of a charging station_2 corresponding to the operator_1 overlaps with information of a charging station_4 corresponding to the operator_3, sixth indication information may be generated to indicate that an affiliation relationship of the charging station_2 corresponding to the operator_1 is abnormal.

In this way, it can be determined whether the affiliation of the charging station corresponding to each operator is normal, and if the affiliation is abnormal, the affiliation can be accurately adjusted in time, so that more accurate charging information can be pushed to the user.

In step 206, determining, from the data cleaning result, abnormal information of a charging station corresponding to any one of the at least one operator.

The data cleaning result may include normal information and abnormal information corresponding to the charging station.

For example, the charging station information may include address information, and the data cleaning result for the address information may include normal information indicating that the address information is complete and accurate, and first indication information indicating that the address information is abnormal.

After completing all data cleaning tasks, the computing subsystem 102 may send the generated data cleaning result to the internal station operation system in the operation subsystem 101. Correspondingly, the internal station operation system of the operation subsystem 101 may determine, based on the data cleaning result generated by itself or received from the computing subsystem 102, the abnormal information of the charging station corresponding to each operator, that is, the indication information corresponding to each charging station.

For example, the data cleaning result for the address information of the charging station_1 may include normal information indicating that the address information is complete and accurate, and first indication information indicating that the address information is abnormal. The operation subsystem 101 may determine the charging station_1 and the first indication information corresponding to the charging station_1 from the data cleaning result.

In this way, the abnormal information of the charging station corresponding to each operator can be determined, and the charging station that needs to be maintained and the abnormal condition of the charging station can be determined based on the abnormal information, so that the maintenance personnel can be scheduled in time to perform targeted maintenance on the abnormal charging station, the maintenance efficiency of the charging station is improved, and better charging services are provided for the user.

In an embodiment, the operation subsystem 101 may output the abnormal information to the user.

The operation subsystem 101 may output, to the user, a visual interface configured to display the abnormal information, and through the visual interface, the operation subsystem 101 may output, to the user, related information of a charging station corresponding to each operator, where the related information may include the abnormal information and the normal information.

In this way, the maintenance personnel can clearly and intuitively understand the abnormal situation of the charging station corresponding to each operator, which is convenient for taking corresponding maintenance measures subsequently for the abnormal situation, and improves the maintenance efficiency of the charging station.

In an embodiment, the operation subsystem 101 may further compare the charging station information with historical charging station information; or the operation subsystem 101 sends an execution instruction to the computing subsystem 102, so that the computing subsystem 102 obtains the charging station information from the storage subsystem 103, and compares the charging station information with historical charging station information. In this way, the operation subsystem 101 may determine, based on the comparison result generated by itself or received from the computing subsystem 102, whether the count of charging stations and/or the charging station information respectively corresponding to each of the at least one operator has changed; and if the count of charging stations and/or the charging station information respectively corresponding to each of the at least one operator has changed, the changed charging station information may be recorded.

The historical charging station information may be charging station information acquired by the operation subsystem 101 last time from the service platform corresponding to the at least one operator, and when the currently acquired charging station information is different from the historical charging station information, the operation subsystem 101 may record the currently acquired charging station information, so as to subsequently prompt the user that the charging station has changed based on the currently acquired charging station information.

For example, when the maintenance personnel maintain the abnormal information corresponding to the previous charging station information, the information corresponding to the charging station will be changed, and the operation subsystem 101 may record the changed charging station information to inform the user that the charging station has been repaired and can provide charging services.

For another example, one of the at least one operator is added with a new charging station, or another operator removes an old charging station, then the operation subsystem 101 may record information of the changed charging station information, to notify the user that a new charging station can be used, or that an old charging station at an address has been removed.

In this way, the user can be informed of the changed charging station in time, and the information of the changed charging station can be pushed to the user, thereby providing the user with more timely and accurate charging services.

In the illustrated embodiment, the operation subsystem 101 may output the changed charging station information to the user.

The operation subsystem 101 may push the latest information of the changed charging station to the user through a visual interface output to the user.

In this way, the user who needs to use the charging service can know the change of each charging station in time, so as to select an appropriate charging station based on the change.

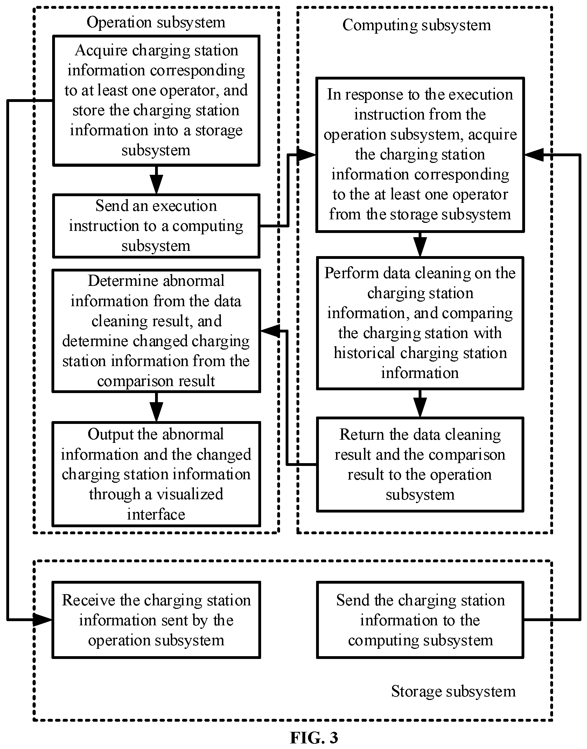

To enable a person skilled in the art to better understand the technical solutions in the implementations of the present specification, the following describes the implementations of the present specification with reference to a flowchart of a charging station management method shown in FIG. 3.

Referring to FIG. 3, FIG. 3 is a flowchart of another charging station management method according to an example embodiment.

An operation subsystem 101 may acquire charging station information corresponding to at least one operator, and may store the charging station information into a storage subsystem 103.

The operation subsystem 101 may perform data cleaning on the obtained charging station information, or may send an execution instruction to a computing subsystem 102, to trigger the computing subsystem 102 to obtain the charging station information from the storage subsystem 103, and perform the following data cleaning on the charging station information.

The processor of the operation subsystem 101 or the computing subsystem 102 may perform data cleaning on address information of the charging station, determine whether the address information is complete by determining whether the address information includes preset information, where the preset information may include province information, city information, etc., and if the address information is incomplete, determine that the address information is abnormal, and may generate first indication information indicating that the address of the charging station is abnormal and determine the first indication information as the data cleaning result. If the address information is complete, an address parsing API may be further called to parse the address information to obtain a parsing result, and whether the address information is accurate is determined based on the parsing result, and if the address information is inaccurate, it may also be determined that the address information is abnormal, and first indication information indicating that the address of the charging station is abnormal may be generated and determined as the data cleaning result.

The processor of the operation subsystem 101 or the computing subsystem 102 may perform data cleaning on a count of devices in the charging station, may determine whether the count of devices in the charging station is 0, and if the count of devices is 0, may generate second indication information indicating that the count of devices is 0 and determine the second indication information as the data cleaning result.

The processor of the operation subsystem 101 or the computing subsystem 102 may perform data cleaning on state information of the charging station, and may determine whether the state information of the charging station is state information within one week; if the state information of the charging station is state information from one week ago, it may be determined that the state of the charging station is abnormal, and third indication information indicating that the state of the charging station is abnormal may be generated and determined as the data cleaning result; and if the state information of the charging station is state information within one week, it may be further determined, based on the state information, whether the state of the charging station is normal, and if the state of the charging station is abnormal, third indication information indicating that the state of the charging station is abnormal may be generated and determined as a data cleaning result.

The processor of the operation subsystem 101 or the computing subsystem 102 may perform data cleaning on order information of the charging station, and may determine whether the order information of the charging station includes normal order information within one week; and if it is determined that the order information of the charging station does not include normal order information within one week, may generate fourth indication information indicating that the order information of the charging station is abnormal and determine the fourth indication information as the data cleaning result.

The processor of the operation subsystem 101 or the computing subsystem 102 may perform data cleaning on price information of the charging station, and may determine whether the price information of the charging station includes price information corresponding to twenty-four hours; and if it is determined that the price information of the charging station does not include price information corresponding to twenty-four hours, may generate fifth indication information indicating that the price information of the charging station is abnormal and determine the fifth indication information as the data cleaning result.

The processor of the operation subsystem 101 or the computing subsystem 102 may perform data cleaning on charging station information corresponding to a multiple operators, where the multiple operators may include an operator_1, an operator_2, and an operator_3, may determine whether charging station information corresponding to any one of the three operators overlaps with charging station information corresponding to other operators, and if information of a charging station_2 corresponding to the operator_1 overlaps with information of a charging station_4 corresponding to the operator_3, may generate sixth indication information indicating that an affiliation relationship of the charging station_2 is abnormal and determine the sixth indication information as the data cleaning result.

After completing the data cleaning, the computing subsystem 102 may return the data cleaning result to the operation subsystem 101. Correspondingly, the operation subsystem 101 may obtain the indication information from the data cleaning result, determine abnormal information of the charging station corresponding to any one of the at least one operator, and output the abnormal information to the maintenance personnel through a visual interface output to the maintenance personnel.

In addition, the operation subsystem 101 may further obtain the charging station information, and compare the charging station information with historical charging station information; or the operation subsystem 101 sends an execution instruction to the computing subsystem 102, to trigger the computing subsystem 102 to obtain the charging station information from the storage subsystem 103, and compare the charging station information with historical charging station information. In this way, the operation subsystem 101 may determine, based on the comparison result generated by itself or received from the computing subsystem 102, whether the count of charging stations and/or the charging station information respectively corresponding to each of the at least one operator has changed; and if the count of charging stations and/or the charging station information respectively corresponding to each of the at least one operator has changed, the changed charging station information may be recorded.

After completing the comparison, the computing subsystem 102 may return a comparison result to the operation subsystem 101. Correspondingly, the operation subsystem 101 may obtain the recorded changed charging station information from the comparison result, determine the changed charging station, and push the latest information of the changed charging station to the user through the visual interface output to the user having charging demands.

Corresponding to the embodiments of the charging station management method, the present specification further provides an embodiment of a charging station management apparatus.

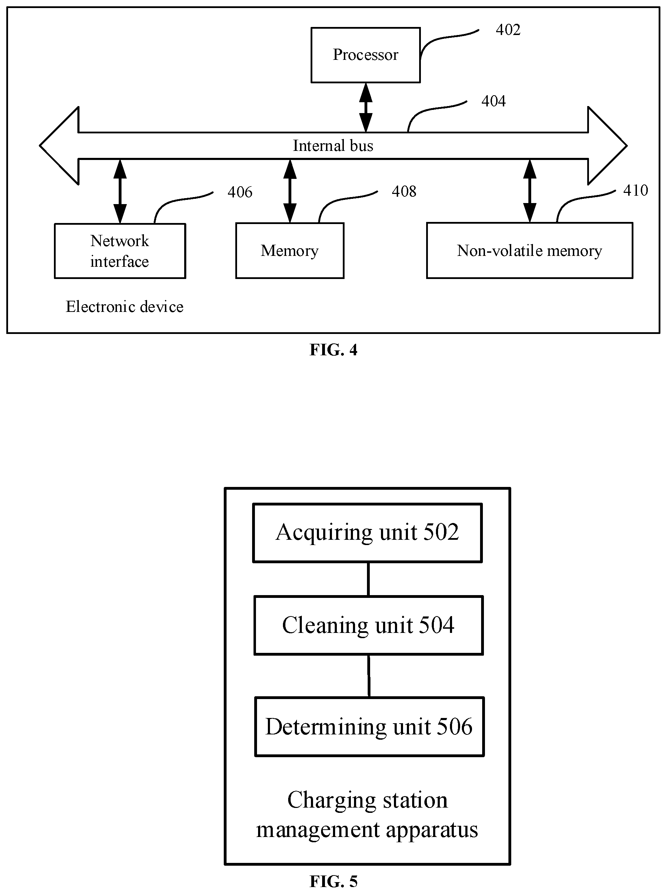

Referring to FIG. 4, FIG. 4 is a hardware structural diagram of an electronic device where a charging station management apparatus is located according to an example embodiment. In terms of hardware, the device includes a processor 402, an internal bus 404, a network interface 406, a memory 408, and a non-volatile memory 410, and certainly may further include hardware required by other services. One or more embodiments of this specification can be implemented based on software, for example, the processor 402 reads a corresponding computer program from the non-volatile memory 410 into the memory 408 and then runs the computer program. Of course, in addition to software implementations, one or more embodiments of the present specification do not exclude other implementations, such as logic devices or a combination of software and hardware, that is, the execution subject of the following processing flow is not limited to each logic unit, and may also be hardware or logic devices.

FIG. 5 is a block diagram of a charging station management apparatus according to an example embodiment. The charging station management apparatus may be applied to the electronic device shown in FIG. 4, to implement the technical solutions in this specification. The apparatus may be applied to an operation subsystem 101 in a management system, the management system further includes a storage subsystem 103, and the apparatus may include: an acquiring unit 502, configured to acquire charging station information corresponding to at least one operator, and store the charging station information into the storage subsystem 103; a cleaning unit 504, configured to perform, by the operation subsystem 101, data cleaning on the charging station information stored in the storage subsystem 103, to obtain a data cleaning result, or cause an external computing subsystem 102 to perform data cleaning on the charging station information stored in the storage subsystem 103, to obtain a data cleaning result; and a determining unit 506, configured to determine, from the data cleaning result, abnormal information of a charging station corresponding to any one of the at least one operator.

In this embodiment, the apparatus may further include an output unit configured to output the abnormal information to a user.

In this embodiments, the cleaning unit 504 may be further configured to: compare, by the operation subsystem, or causing the computing subsystem 102 to compare the charging station information stored in the storage subsystem with historical charging station information to obtain a comparison result; determining, based on the comparison result, whether at least one of a count of charging stations or the charging station information corresponding to each of the at least one operator has changed; and in response to determining that at least one of the count of charging stations or the charging station information corresponding to any one of the at least one operator has changed, recording changed charging station information.

In this embodiment, the output unit may be further configured to output the changed charging station information to the user.

In this embodiment, the charging station information includes address information of a charging station; the cleaning unit 504 may be further configured to: acquire the address information of the charging station; determine whether the address information of the charging station is complete; in response to determining that the address information of the charging station is complete, parse the address information by calling an address parsing application programming interface (API) to obtain a parsing result, and determine whether the address information is accurate based on the parsing result; in response to determining that the address information is inaccurate, generate first indication information indicating that an address of the charging station is abnormal, and determine the first indication information as the data cleaning result; and in response to determining that the address information of the charging station is incomplete, generate the first indication information and determine the first indication information as the data cleaning result.

In this embodiment, the charging station information includes a count of devices in the charging station; and the cleaning unit 504 may be further configured to: acquire the count of devices in the charging station; determine whether the count of devices is equal to a preset count; and if the count of devices is equal to the preset count, generate second indication information indicating that the count of devices is equal to the preset count and determine the second indication information as the data cleaning result.

In this embodiment, the charging station information includes state information of a charging station; and the cleaning unit 504 may further be configured to: acquire the state information of the charging station; determine whether the state information of the charging station is state information corresponding to a preset time period; in response to determining that the state information of the charging station is the state information corresponding to the preset time period, determine whether a state of the charging station is normal based on the state information of the charging station; and in response to determining that the state of the charging station is abnormal, generate third indication information indicating that the state of the charging station is abnormal, and determine the third indication information as the data cleaning result; and in response to determining that the state information of the charging station is not the state information corresponding to the preset time period, generate the third indication information and determine the third indication information as the data cleaning result.

In some embodiments, the charging station information includes order information of a charging station; and the cleaning unit 504 may further be configured to: acquire the order information of the charging station; determine whether the order information of the charging station includes normal order information within a preset time period; and in response to determining that the order information of the charging station does not include normal order information within the preset time period, generate fourth indication information indicating that the order information of the charging station is abnormal, and determine the fourth indication information as the data cleaning result.

In this embodiment, the charging station information includes price information of a charging station; and the cleaning unit 504 may further be configured to: acquire the price information of the charging station; determine whether the price information of the charging station includes price information corresponding to a preset time period; and in response to determining that the price information of the charging station does not include the price information corresponding to the preset time period, generate fifth indication information indicating that the price information of the charging station is abnormal, and determine the fifth indication information as the data cleaning result.

In this embodiment, the at least one operator includes multiple operators; where the cleaning unit 504 may further be configured to: acquire the charging station information corresponding to the multiple operators respectively; determine whether the charging station information corresponding to any one of the multiple operators overlaps with the charging station information corresponding to other operators of the multiple operators; and in response to determining that the charging station information corresponding to any one of the multiple operators overlaps with the charging station information corresponding to other operators of the multiple operators, generate sixth indication information indicating that an affiliation relationship of the corresponding charging station is abnormal, and determine the sixth indication information as the data cleaning result.

For specific implementation processes of functions and roles of the units in the apparatus, implementation processes of corresponding steps in the method can be referred to, which will not be repeated herein.

For the apparatus embodiments, as they basically correspond to the method embodiments, reference may be made to the partial description of the method embodiments for relevant parts. The apparatus embodiments described above are merely illustrative, where the units described as separate components may or may not be physically separate, and the components displayed as units may or may not be physical units, that is, may be located in one place, or may be distributed on a plurality of network units. Some or all of the modules may be selected according to actual needs to achieve the objectives of the solutions of the present specification. Those skilled in the art can understand and implement without making creative efforts.

The system, apparatus, module, or unit described in the embodiments may be specifically implemented by a computer chip or an entity, or may be implemented by a product having a function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any several of these devices.

In a typical configuration, a computer includes one or more processors (central processing unit, CPU), input/output interfaces, network interfaces, and memory.

The memory may include a volatile memory, a random access memory (RAM), and/or a non-volatile memory in a computer-readable medium, for example, a read-only memory (ROM) or a flash RAM. The memory is an example of a computer-readable medium.

The computer-readable medium includes permanent and non-permanent, and removable and non-removable media that can implement information storage by any method or technology. The information may be a computer-readable instruction, a data structure, a program module, or other data. Examples of a storage medium of a computer include, but are not limited to, a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette tape, a magnetic disk storage, a quantum memory, a graphene-based storage medium or another magnetic storage device, or any other non-transmission medium, and may be configured to store information that can be accessed by a computing device. As defined herein, the computer-readable medium does not include transitory computer-readable media, such as modulated data signals and carriers.

It should also be noted that the terms "include", "comprise" or any other variants thereof are intended to cover non-exclusive inclusion, so that a process, method, commodity or device that includes a series of elements not only includes those elements, but also includes other elements that are not explicitly listed, or further includes elements inherent to such a process, method, commodity or device. Without further limitation, an element defined by the phrase "including a..." does not exclude the presence of other identical elements in the process, method, article, or device that includes the element.

Specific embodiments of the present disclosure are described. Other embodiments are within the scope of the following claims. In some cases, the actions or steps described in the claims may be performed in an order different from that in the embodiments and still achieve the desired results. In addition, the processes depicted in the accompanying figures do not necessarily require the particular order shown, or sequential order, to achieve desirable results. In certain implementations, multitasking and parallel processing are also possible or may be advantageous.

The terms used in one or more embodiments of the present disclosure are for the purpose of describing particular embodiments only and are not intended to limit one or more embodiments of the present disclosure. As used in one or more embodiments of the present disclosure and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items.

It should be understood that although the terms first, second, third, etc. may be used to describe various information in one or more embodiments of the present specification, the information should not be limited to these terms. These terms are only used to distinguish the same type of information from each other. For example, without departing from the scope of one or more embodiments of this specification, "first information" may also be referred to as "second information", and similarly, "second information" may also be referred to as "first information". Depending on the context, the word "if" as used herein may be interpreted as "when" or "upon" or "in response to determining".

The foregoing descriptions are merely preferred embodiments of the one or more embodiments of the present specification, but are not intended to limit the one or more embodiments of the present specification, and any modifications, equivalent substitutions, improvements, and the like made within the spirit and principles of the one or more embodiments of the present specification shall fall within the protection scope of the one or more embodiments of the present specification.

The user information (including but not limited to user equipment information, user personal information, etc.) and data (including but not limited to data for analysis, stored data, displayed data, etc.) involved in the present application are information and data authorized by the user or fully authorized by all parties, and the collection, use and processing of related data need to comply with relevant laws, regulations and standards of relevant countries and regions, and provide corresponding operation entries for the user to select authorization or rejection.

## Claims

1. A charging station management method for a management system that comprises an operation subsystem and a storage subsystem, and the method comprising:
acquiring charging station information corresponding to at least one operator, and storing the charging station information into the storage subsystem;
causing the operation subsystem or an external computing subsystem to perform data cleaning for the charging station information stored in the storage subsystem to obtain a data cleaning result; and
determining, from the data cleaning result, abnormal information of a charging station corresponding to any one of the at least one operator.

2. The method according to claim 1, further comprising:
outputting the abnormal information to a user.

3. The method according to claim 1, further comprising:
causing the operation subsystem or the computing subsystem to compare the charging station information stored in the storage subsystem with historical charging station information to obtain a comparison result;
determining, based on the comparison result, whether at least one of a count of charging stations or the charging station information corresponding to each of the at least one operator has changed; and
in response to determining that at least one of the count of charging stations or the charging station information corresponding to any one of the at least one operator has changed, recording changed charging station information.

4. The method according to claim 3, further comprising:
outputting the changed charging station information to a user.

5. The method according to claim 1, wherein the charging station information comprises address information of a charging station; and causing the operation subsystem or the computing subsystem to perform data cleaning for the charging station information stored in the storage subsystem to obtain the data cleaning result comprises:
acquiring the address information of the charging station;
determining whether the address information of the charging station is complete;
in response to determining that the address information of the charging station is complete,
parsing the address information by calling an address parsing application programming interface (API) to obtain a parsing result, and
determining whether the address information is accurate based on the parsing result;
in response to determining that the address information is inaccurate,
generating first indication information indicating that an address of the charging station is abnormal, and
determining the first indication information as the data cleaning result; or
in response to determining that the address information of the charging station is incomplete, generating first indication information and determining the first indication information as the data cleaning result.

6. The method according to claim 5, wherein parsing the address information by calling the address parsing API to obtain the parsing result, and determining whether the address information is accurate based on the parsing result comprises:
parsing the address information by calling the address parsing API to generate latitude and longitude information corresponding to the address information,
querying whether a location corresponding to the longitude and latitude information matches the address information; and
in response to determining that the location corresponding to the longitude and latitude information matches the address information, determining that the address information is accurate.

7. The method according to claim 1, wherein the charging station information comprises a count of devices in a charging station; and causing the operation subsystem or the computing subsystem to perform data cleaning for the charging station information stored in the storage subsystem to obtain the data cleaning result comprises:
acquiring the count of devices in the charging station;
determining whether the count of devices is equal to a preset count; and
in response to determining that the count of devices is equal to the preset count, generating second indication information indicating that the count of devices is equal to the preset count, and determining the second indication information as the data cleaning result.

8. The method according to claim 1, wherein the charging station information comprises state information of a charging station; and causing the operation subsystem or the computing subsystem to perform data cleaning for the charging station information stored in the storage subsystem to obtain the data cleaning result comprises:
acquiring the state information of the charging station;
determining whether the state information of the charging station is state information corresponding to a preset time period;
in response to determining that the state information of the charging station is the state information corresponding to the preset time period,
determining whether a state of the charging station is normal based on the state information of the charging station;
in response to determining that the state of the charging station is abnormal, generating third indication information indicating that the state of the charging station is abnormal, and determining the third indication information as the data cleaning result; and
in response to determining that the state information of the charging station is not the state information corresponding to the preset time period, generating third indication information and determining the third indication information as the data cleaning result.

9. The method according to claim 1, wherein the charging station information comprises order information of a charging station; and cause the operation subsystem or the computing subsystem to perform data cleaning for the charging station information stored in the storage subsystem to obtain the data cleaning result comprises:
acquiring the order information of the charging station;
determining whether the order information of the charging station comprises normal order information within a preset time period; and
in response to determining that the order information of the charging station does not comprise normal order information within the preset time period, generating fourth indication information indicating that the order information of the charging station is abnormal, and determining the fourth indication information as the data cleaning result.

10. The method according to claim 1, wherein the charging station information comprises price information of a charging station; and causing the operation subsystem or the computing subsystem to perform data cleaning for the charging station information stored in the storage subsystem to obtain the data cleaning result comprises:
acquiring the price information of the charging station;
determining whether the price information of the charging station comprises price information corresponding to a preset time period; and
in response to determining that the price information of the charging station does not comprise the price information corresponding to the preset time period, generating fifth indication information indicating that the price information of the charging station is abnormal, and determining the fifth indication information as the data cleaning result.

11. The method according to claim 1, wherein the at least one operator comprises multiple operators; wherein causing the operation subsystem or the computing subsystem to perform data cleaning for the charging station information stored in the storage subsystem to obtain the data cleaning result comprises:
acquiring the charging station information corresponding to the multiple operators respectively;
determining whether the charging station information corresponding to any one of the multiple operators overlaps with the charging station information corresponding to other operators of the multiple operators; and
in response to determining that the charging station information corresponding to any one of the multiple operators overlaps with the charging station information corresponding to other operators of the multiple operators, generating sixth indication information indicating that an affiliation relationship of the charging station corresponding to the operator is abnormal, and determining the sixth indication information as the data cleaning result.

12. A charging station management system, comprising:
a storage subsystem; and
an operation subsystem, wherein the charging station management system is configured to:
acquire charging station information corresponding to at least one operator, and store the charging station information into the storage subsystem;
cause the operation subsystem or an external computing subsystem to perform data cleaning for the charging station information stored in the storage subsystem to obtain a data cleaning result; and
determine, from the data cleaning result, abnormal information of a charging station corresponding to any one of the at least one operator.

13. A charging station management apparatus, applied to an operation subsystem in a management system, wherein the management system further comprises a storage subsystem, and the apparatus comprises:
an acquiring unit, configured to acquire charging station information corresponding to at least one operator, and store the charging station information into the storage subsystem;
a cleaning unit, configured to cause the operation subsystem or an external computing subsystem to perform data cleaning for the charging station information stored in the storage subsystem to obtain a data cleaning result; and
a determining unit, configured to determine, from the data cleaning result, abnormal information of a charging station corresponding to any one of the at least one operator.

14. An electronic device, comprising a communication interface, one or more processors, a memory and a bus, wherein the communication interface, the one or more processors and the memory are connected to each other through the bus;
the memory stores a machine-readable instruction, and the one or more processors call the machine-readable instruction to perform the charging station management method according to any one of claims 1-11.

15. A machine-readable storage medium storing a machine-readable instruction, wherein when the machine-readable instruction is called and executed by one or more processors, the charging station management method according to any one of claims 1-11 is implemented.
